# EUROPÄISCHE PATENTSCHRIFT

(11) **EP 0 976 948 B1**
(45) Veröffentlichungstag und Bekanntmachung des Hinweises auf die Patenterteilung: **20.09.2006**
(21) Anmeldenummer: 99114316.5
(22) Anmeldetag: 21.07.1999
(51) Int. Cl.: F16F 9/512, H01F 7/08, F16F 9/49

(54) **Dämpfungseinrichtung für bewegte Massen, vorzugsweise für elektromagnetische Antriebssysteme**
Damping device for moving masses, particularly for electromagnetic drive systems
Dispositif d'amortissement de masses déplacées, en particulier pour systèmes moteurs électromagnétiques

(30) Priorität: 31.07.1998 DE 19834522
(43) Veröffentlichungstag der Anmeldung: 02.02.2000
(73) Patentinhaber: HYDRAULIK-RING GMBH, 97828 Marktheidenfeld (DE)
(72) Erfinder: Maisch, Dieter, 72585 Riederich (DE); Tischer, Dieter, 73240 Wendlingen (DE); Trzmiel, Alfred, 72661 Grafenberg (DE)

(56) Entgegenhaltungen:
- DE-A- 2 419 424
- DE-B- 1 271 830
- GB-A- 752 812
- GB-A- 2 310 023
- US-A- 3 889 934
- US-A- 4 908 731
- US-A- 4 937 913
- US-A- 5 050 712

## Beschreibung

Die Erfindung betrifft eine Anordnung, vorzugsweise für elektromagnetische Ventilsteuerungen, nach dem Oberbegriff des Anspruches 1.

Bei nockenwellenlosen elektromagnetischen Ventilsteuerungen in Verbrennungsmotoren ist es bekannt, das Ventil mittels einer Ankerachse zu öffnen. In Richtung auf die Schließstellung ist das Ventil federbelastet. Auf der Ankerachse sitzt ein Anker, der mit zwei Spulen wahlweise bewegt werden kann. Ausgehend von einer Mittelstellung wird je nach Bestromung der entsprechenden Spule der Anker in der gewünschten Richtung verschoben. Die Ankerachse wird durch Federkraft in Anlage an den Ventilschaft gehalten. Die die Ankerachse belastende Druckfeder ist so weit vorgespannt, daß bei stromlosem Zustand des Elektroantriebes der Anker in der Mittelstellung gehalten wird. Beim Verschieben trifft der Anker mit hoher Kraft und mit hoher Geschwindigkeit auf elektroantriebsseitige Anschläge, was zu einer erheblichen Geräuschentwicklung führt und die Lebensdauer des Elektroantriebes verringert. Die die Ankerachse bzw. den Ventilschaft belastenden Federn setzen der Ankerachse und dem Anker einen Widerstand entgegen, jedoch kann er nicht so hoch eingestellt werden, um das harte Anschlagen des Ankers an den Anschlägen zu dämpfen bzw. zu vermeiden.

Aus der Patentliteratur sind zahlreiche hydraulische Dämpfungssysteme bekannt, von denen beispielhaft einige benannt sind.

Die GB 752 812 zeigt ein komplettes System, das die Bewegung eines Kolbens überprüfen soll. Es wird mit einer einzelnen Blende gearbeitet. Über das mechanisch feste Eindrehen einer Schraube wird der maximale Durchfluss permanent eingestellt.

Die GB 2 310 023 beschreibt ein ausschließlich passives Schwingungsdämpfungssystem, dessen Einsatzgebiet im automobilen Fahrzeugbau liegt.

Die DE 24 19 424 stellt einen gestuften Schwingungsdämpfer für Eisenbahnwagons dar, dessen Dämpfung deswegen progressiv zunimmt, weil einzelne Bohrungen nach und nach verschlossen werden, und somit das Öl über alle drei Ventilkolben gelenkt wird. Es ist wiederum ein rein passives System, das nicht im Rahmen eines "elektromagnetischen Antriebssystems" verwendbar ist.

Die US 3 889 934 zeigt einen hydraulischen Puffer, der das Schwingen eines Baumaschinenarmes unterdrücken soll. Die Dämpfungseinrichtung wird im Schwermaschinenbau eingesetzt.

Die US 4 937 913 zeigt ein Dämpfungselement für einen Türschließer. Die hydraulische Dämpfung erfolgt über ein Kugelventil. Das Ventil öffnet schlagartig und schließt ebenso.

Die US 5 050 712) bezieht sich wiederum auf einen Schwingungsdämpfer, der wieder eine große Anzahl an Löchern in einem Zylinder bietet, um das rein passive System zu einer niederfrequenten Schwingungsdämpfung zu bringen.

Die OS 1 271 830 offenbart als nächstliegender Stand der Technik prinzipiell eine Verbindung zwischen Hydraulik und Elektrik, das eine elektromagnetische Stellvorrichtung ist.

Der Erfindung liegt die Aufgabe zugrunde, die gattungsgemäße Dämpfungseinrichtung so auszubilden, daß sie geräuscharm arbeitet, eine lange Lebensdauer hat und auf kürzestem Wege zuverlässig auf Stillstand abbremst.

Diese Aufgabe wird bei der gattungsgemäßen Anordnung erfindungsgemäß mit den kennzeichnenden Merkmalen des Anspruches 1 gelöst.

Bei der erfindungsgemäßen Anordnung wird eine hohe Geräuschdämpfung sowie eine lange Lebensdauer der Dämpfungseinrichtung bzw. des Antriebssystem erreicht.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: im Axialschnitt eine erfindungsgemäße Anordnung,
- Fig. 1a bis Fig. 1c: verschiedene Stellungen eines Dämpfungskolbens der erfindungsgemäßen Anordnung,
- Fig. 2: ein Hub-Zeit-Diagramm der Dämpfungseinrichtung gemäß Fig. 1,
- Fig. 3: im Axialschnitt eine weitere Ausführungsform einer erfindungsgemäßen Anordnung,
- Fig. 3a bis Fig. 3c: unterschiedliche Stellungen eines Dämpfungskolbens der Dämpfungseinrichtung gemäß Fig. 3,
- Fig. 4: ein Hub-Zeit-Diagramm der Dämpfungseinrichtung gemäß Fig. 3,
- Fig. 5: im Axialschnitt eine weitere Ausführungsform einer erfindungsgemäßen Anordnung,
- Fig. 6: im Axialschnitt eine weitere Ausführungsform einer erfindungsgemäßen Anordnung,
- Fig. 6a bis Fig. 6c: verschiedene Stellungen eines Dämpfungskolbens der Dämpfungseinrichtung gemäß Fig. 6,
- Fig. 7: eine weitere Ausführungsform einer erfindungsgemäßen Anordnung,
- Fig. 7a bis Fig. 7c: verschiedene Stellungen eines Dämpfungskolbens der Dämpfungseinrichtung gemäß Fig. 7,
- Fig. 8: im Axialschnitt eine weitere Ausführungsform einer erfindungsgemäßen Anordnung,
- Fig. 9: in vergrößerter Darstellung einen Teil der Dämpfungseinrichtung gemäß Fig. 8,
- Fig. 9a: einen Schnitt längs der Linie A-B in Fig. 9,
- Fig. 9b: einen Axialschnitt durch einen Teil der Dämpfungseinrichtung gemäß Fig. 9 mit einem Fräser zur Herstellung einer Tasche in der Dämpfungseinrichtung,
- Fig. 10: ein Kraft-Weg-Diagramm der Dämpfungseinrichtung gemäß Fig. 8,
- Fig. 11: ein Hub-Zeit-Diagramm für Antriebssysteme mit und ohne Dämpfer,
- Fig. 12: in einem Diagramm Ventilsteuerzyklen bei verschiedenen Motordrehzahlen einer mit einer erfindungsgemäßen Anordnung ausgestatteten Ventilsteuerung eines Verbrennungsmotors.

Die im folgenden beschriebenen Dämpfungseinrichtungen sind für bewegte Massen, vorzugsweise für elektromagnetische Antriebssysteme, vorgesehen. Solche elektromagnetischen Antriebssysteme werden vorzugsweise für nockenwellenlose elektromagnetische Ventilsteuerungen in Verbrennungsmotoren eingesetzt.

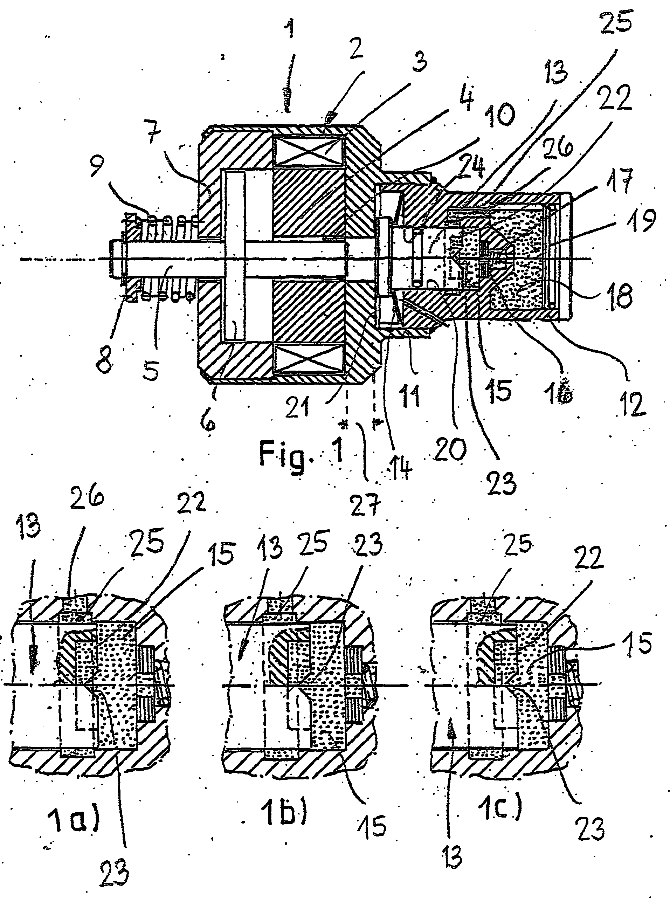

Die Anordnung gemäß Fig. 1 hat einen Elektroantrieb 1 mit einem Gehäuse 2, in dem eine Spule 3 untergebracht ist. Sie umgibt einen Kern 4, durch den eine Achse 5 ragt, auf der ein Anker 6 befestigt ist. Im Hinblick auf eine kompakte Ausbildung ist der Anker 6 vorteilhaft als Flachanker ausgebildet. Er kann aber auch zylinderförmig ausgebildet sein. Der Anker 6 ist zwischen dem Kern und einem Boden 7 des Gehäuses 2 mittels der Achse 5 verschiebbar. Die Ankerachse 5 ragt durch den Boden 7. Auf dem außerhalb des Gehäuses 2 befindlichen Ende der Ankerstange 5 sitzt ein Federteller 8, an dem sich eine Druckfeder 9 abstützt. Sie umgibt außerhalb des Gehäuses 2 mit Abstand die Ankerachse 5 und stützt sich an der Außenseite des Gehäusebodens 7 ab. Unter der Kraft der Druckfeder 9 liegt die Ankerachse 5 an einem (nicht dargestellten) Schaft eines Ventiles an. Innerhalb des Kerns 4 ist die Ankerachse 5 durch wenigstens ein Lager 10 axial geführt.

An einen stirnseitigen zylindrischen Flansch 11 des Gehäuses 2 ist ein Gehäuseteil 12 angesetzt, in dem sich fluchtend zur Ankerachse 5 ein Dämpfungskolben 13 befindet. Er steht unter der Kraft wenigstens einer Rückstellfeder 14, die vorzugsweise eine Tellerfeder ist, die nur wenig Einbauraum, insbesondere in axialer Richtung, benötigt. Auf der von der Ankerachse 5 abgewandten Seite des Dämpfungskolbens 13 ist ein Druckraum 15 vorgesehen, in den eine Nachsaugleitung 16 mündet. In ihr sitzt ein Rückschlagventil 17, das den Druckraum 15 von einem Reservoir 18 für Hydraulikmedium trennt. Das Reservoir 18 ist durch einen Schraubdeckel 19 geschlossen, der in den Gehäuseteil 12 geschraubt ist.

Der Dämpfungskolben 13 ist abgedichtet in einer Bohrung 20 des Gehäuseteiles 12 geführt.

Ist die Spule 3 stromlos, nehmen die Bauteile die in Fig. 1 dargestellte Lage ein. Die Ankerachse 5 wird durch die Druckfeder 9 in die Anschlagstellung gezogen, in der der Anker 6 am Gehäuseboden 7 anschlägt. Der Dämpfungskolben 13 liegt unter der Kraft der Rückstellfeder 14 an einer gehäuseseitigen Anschlagfläche 21 an. Die Ankerachse 5 hat in dieser Stellung axialen Abstand vom Dämpfungskolben 13. Beim Zurückschieben des Dämpfungskolbens 13 unter der Kraft der Rückstellfeder 14 in die in Fig. 1 dargestellte Lage entsteht im Druckraum 15 ein Unterdruck, durch den das Rückschlagventil 17 geöffnet wird. Dadurch wird ein Teil des im Reservoir 18 befindlichen Hydraulikmediums rasch in den Druckraum 15 nachgezogen bzw. nachgesaugt. Die den Druckraum 15 begrenzende Stirnseite 22 des Dämpfungskolbens 13 weist eine im Querschnitt dreieckförmige, diametral sich erstreckende Vertiefung 23 auf. In der Wandung 24 der Bohrung 20 befindet sich ein Ringkanal 25, der über eine im Gehäuseteil 12 vorgesehene Bohrung 26 mit dem Reservoir 18 leitungsverbunden ist. Beim Zurückschieben des Dämpfungskolbens 13 in die in Fig. 1 dargestellte Anschlagstellung gelangt die einen Steuerquerschnitt bildende Vertiefung 23 in den Bereich des Ringkanals 25, so daß über ihn und die daran anschließende Bohrung 26 ebenfalls Hydraulikmedium aus dem Reservoir 18 angesaugt wird. Aufgrund der dreieckförmigen Querschnittsausbildung der Vertiefung 23 wird der Öffnungsquerschnitt beim Zurückschieben des Dämpfungskolbens 13 in die Anschlagstellung stetig vergrößert, so daß der Druckraum 15 sowohl über den Ringkanal 25 als auch über das geöffnete Rückschlagventil 17 rasch mit Hydraulikmedium gefüllt wird.

Wird die Spule 3 bestromt, wird der Anker 6 gegen die Kraft der Druckfeder 9 verschoben. Zu Beginn dieser Verschiebebewegung hat die Ankerachse 5 Abstand vom Dämpfungskolben 13. Dadurch ist zum Verschieben des Ankers 6 zunächst nur eine geringe Kraft erforderlich. Der Abstand 27 zwischen der Ankerachse 5 und dem Dämpfungskolben 13 bildet eine Freiflugstrecke, nach deren Überwinden die Ankerachse 5 auf den Dämpfungskolben 13 trifft und ihn nunmehr gegen die Kraft der Rückstellfeder 14 sowie gegen den sich im Druckraum 15 aufbauenden Hydraulikdruck verschiebt. Die Entstehung dieses Drucks im Druckraum 15 wird im folgenden anhand der Fig. 1a bis 1c näher erläutert.

Fig. 1a zeigt den Dämpfungskolben in der Stellung entsprechend Fig. 1, bei der die Spule 3 stromlos ist. Über die Vertiefung 23 in der Stirnseite 22 des Dämpfungskolbens 13 besteht eine Verbindung zum Ringkanal 25 und zur Bohrung 26. Wird der Dämpfungskolben 13 durch die Ankerachse 5 gegen die Kraft der Rückstellfeder 14 verschoben, wird der Durchlaßquerschnitt zwischen der Vertiefung 23 und dem Ringkanal 25 infolge der dreieckförmigen Querschnittsausbildung der Vertiefung stetig kleiner. Fig. 1b zeigt die Situation, in der der Durchlaßquerschnitt gerade zu Null geworden ist. In dieser Stellung des Dämpfungskolbens 13 kann kein Hydraulikmedium mehr aus dem Druckraum 15 über die Vertiefung 23 des Dämpfungskolbens in den Ringraum 25 strömen. Das Rückschlagventil 17 (Fig. 1) wird bei dieser Bewegung des Dämpfungskolbens 13 geschlossen. Sobald der Dämpfungskolben 13 die Stellung gemäß Fig. 1b einnimmt und damit der Durchlaßquerschnitt zum Ringkanal 25 geschlossen ist, wird die Geschwindigkeit des Dämpfungskolbens 13 auf Null abgebremst. Die Abbremsung der Ankerachse 5 beginnt zu dem Zeitpunkt, an dem die Ankerachse 5 auf den Dämpfungskolben 13 trifft. Fig. 1c zeigt den Endzustand des Dämpfungskolbens 13, bei dem keine Verbindung zwischen dem Ringkanal 25 und der Vertiefung 23 in der Stirnseite 22 des Dämpfungskolbens besteht.

Auf die beschriebene Weise wird die Bewegung des Ankers 6 optimal abgedämpft, da das im Druckraum 15 befindliche Hydraulikmedium während des Verschiebens des Dämpfungskolbens 13 durch einen stetig kleiner werdenden Durchlaßquerschnitt über die kolbenseitige Vertiefung 23 in den Ringkanal 25 strömen kann. Das Hydraulikmedium wird dann über die Bohrung 26 zum Reservoir 18 zurückgeführt. Sobald die Verbindung zwischen der kolbenseitigen Vertiefung 23 und dem Ringkanal 25 geschlossen ist, läßt sich der Dämpfungskolben 13 aufgrund des nun im geschlossenen Druckraum 15 befindlichen Hydraulikmediums nicht mehr weiter verschieben.

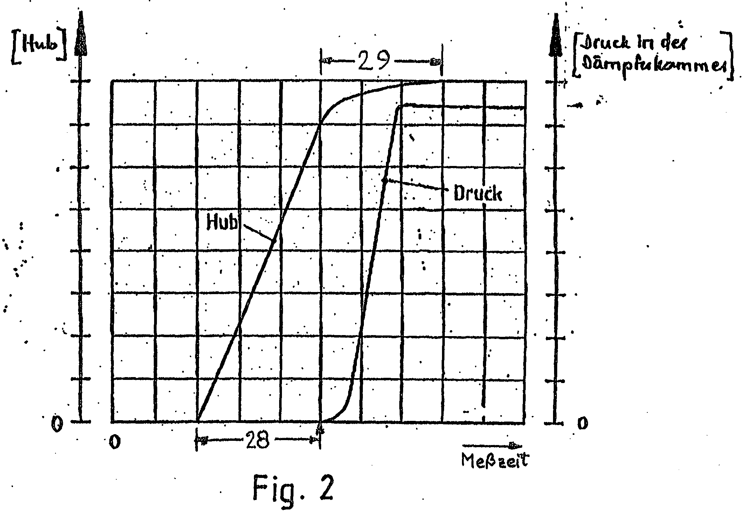

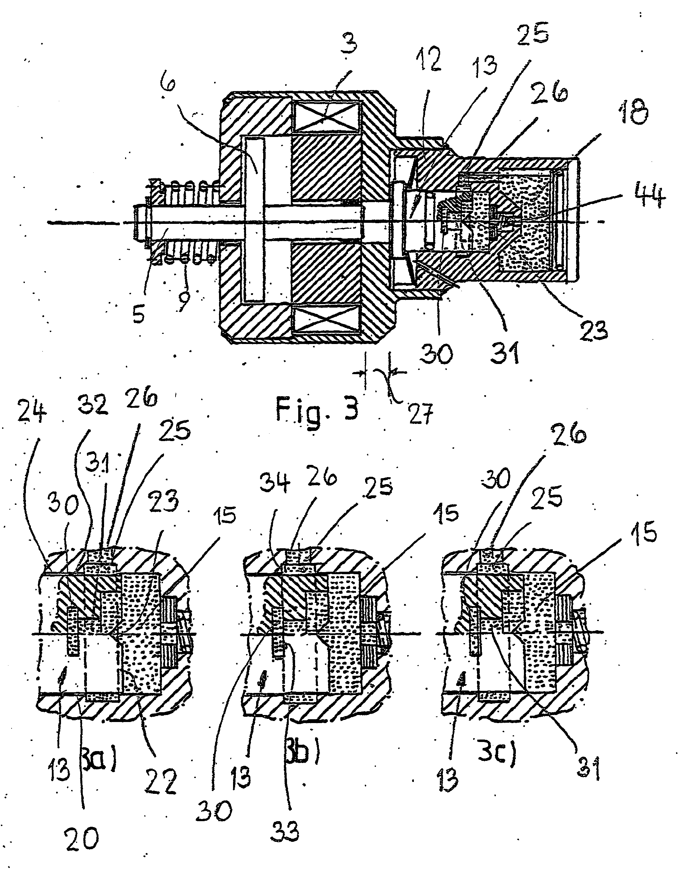

Fig. 2 zeigt die zugehörige Hub-Zeit-Kennlinie der Einrichtung gemäß Fig. 1. Der Hub des Ankers 6 ändert sich, sobald der Elektroantrieb 1 bestromt wird, linear. Da die Ankerachse 5 zunächst Abstand vom Dämpfungskolben 13 hat (Fig. 1), wird der Anker 6 bzw. die Ankerachse 5 mit geringer Kraft verschoben. Die Ankerachse 5 durchläuft eine Freiflugphase 28, bis sie auf den Dämpfungskolben 13 trifft. Dann muß die Ankerachse 5 den Dämpfungskolben 13 gegen die Kraft der Rückstellfeder 14 und den Hydraulikdruck verschieben. Dadurch wird die Freifluggeschwindigkeit der Ankerachse 5 und damit des Ankers 6 entsprechend der abbiegenden Hubkennlinie stark verringert und innerhalb kürzester Zeit auf Null gebracht. Die Abbremsung des Ankers 6 erfolgt innerhalb der Abbremszeit 29 (Fig. 2).

In diesem Diagramm ist auch die Druckkennlinie dargestellt, die sich aufgrund des Druckaufbaus im Druckraum 15 (Fig. 1) ergibt. Der Druck beginnt zu steigen, sobald die Ankerachse 5 auf den Dämpfungskolben 13 trifft. Dementsprechend beginnt der Druck in dem Augenblick zu steigen, in dem auch die Abbremszeit 29 beginnt. Der Druck steigt innerhalb kürzester Zeit bis zu einem Maximalwert an. Er ist erreicht, kurz bevor die Verschiebung des Dämpfungskolbens 13 beendet wird. Dann bleibt der Druck auf dem hohen Maximalwert, der den entsprechenden Hydraulikdruck im Druckraum 15 kennzeichnet, der sich einstellt, wenn der Dämpfungskolben 13 entsprechend Fig. 1c durch die Ankerachse 5 maximal verschoben ist.

Wird die Spule 3 nach einer Haltezeit stromlos gemacht, wird der Dämpfungskolben 13 unter der Kraft der Rückstellfeder 14 und dem im Druckraum 15 aufgebauten Hydraulikdruck schlagartig zurückbewegt. Der Dämpfungskolben 13 nimmt dabei über die Ankerachse 5 den Anker 6 mit. Die Verschiebebewegung der Ankerachse 5 und des Ankers 6 wird durch die Druckfeder 9 unterstützt, die, sobald der Dämpfungskolben 13 an der Anschlagfläche 21 des Gehäuses 1 anschlägt, die Ankerachse 5 in die in Fig. 1 dargestellte Ausgangslage zurückschiebt, in der die Ankerachse 5 den Abstand 27 vom Dämpfungskolben 13 hat.

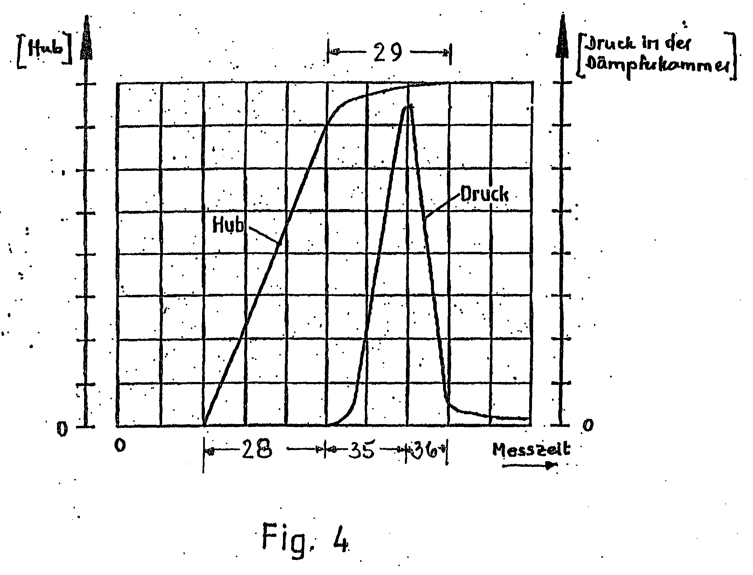

Das Ausführungsbeispiel gemäß Fig. 3 ist im wesentlichen gleich ausgebildet wie das vorige Ausführungsbeispiel. Der Dämpfungskolben 13 ist zusätzlich zur diametralen Vertiefung 23 in der Stirnseite 22 mit einem ihn radial durchsetzenden Steuerquerschnitt 30 versehen, der im Ausführungsbeispiel rechteckigen Querschnitt hat. Er ist über eine axial verlaufende Bohrung 31 (Fig. 3a) mit dem Druckraum 15 verbunden. Zwischen dem Dämpfungskolben 27 und der Wandung 24 der den Dämpfungskolben 13 aufnehmenden Bohrung 20 ist eine Drosselstelle 32 in Form eines Ringspaltes vorgesehen. Über diese Drosselstelle 32 kann das im Druckraum 15 befindliche Hydraulikmedium beim noch zu beschreibenden Verschieben des Dämpfungskolbens 13 in den Ringkanal 25 und von dort über die Bohrung 26 in das Reservoir 18 (Fig. 3) verdrängt werden. Die Drosselstelle kann selbstverständlich auch durch andere geeignete bauliche Maßnahmen gebildet werden, beispielsweise durch eine zusätzliche Drosseldüse.

Fig. 3a zeigt den Dämpfungskolben 13 in seiner Ausgangslage, in der die Spule 3 (Fig. 3) nicht bestromt ist. Die Ankerachse 5 hat in dieser Stellung Abstand vom Dämpfungskolben 13. Die Vertiefung 23 im Dämpfungskolben 13 steht in Verbindung mit dem Ringkanal 25. Wird die Spule 3 bestromt, wird die Ankerachse 5 und damit der Anker 6 gegen die Kraft der Druckfeder 9 verschoben. Nach Überwinden der Freiflugstrecke 27 (Fig. 3) trifft die Ankerachse 5 auf den Dämpfungskolben 13 und nimmt ihn mit. Hierbei wird der Durchlaßquerschnitt zwischen der Vertiefung 23 und dem Ringkanal 25 mit zunehmendem Verschiebeweg des Dämpfungskolbens 13 allmählich geschlossen. In Fig. 3b ist diejenige Lage des Dämpfungskolbens 13 dargestellt, bei der dieser Durchlaßquerschnitt gerade geschlossen ist. Aufgrund des mit zunehmendem Verschiebeweg abnehmenden Durchlaßquerschnitts tritt die gewünschte Dämpfung beim Verschieben auf. In der Stellung gemäß Fig. 3b liegt die rechte Steuerkante 33 deckungsgleich zur linken Steuerkante 34 des Ringkanals 25. Vorteilhaft ist in dieser Stellung der Steuerquerschnitt 30 aufgrund einer Überdeckung noch geschlossen. Dennoch kann der Dämpfungskolben 13 aus dieser Mittelstellung weiter verschoben werden, da das im Druckraum 15 befindliche Hydraulikmedium über die Drosselstelle 32 aus dem Druckraum 15 zum Ringkanal 25 und von dort über die Bohrung 26 in das Reservoir 18 strömen kann.

Sobald der Dämpfungskolben 13 aus der Mittelstellung gemäß Fig. 3b durch die Ankerachse 5 weiter in die Stellung gemäß Fig. 3c verschoben wird, überdeckt der Steuerquerschnitt 30 teilweise den Ringkanal 25. Dadurch kann bei diesem weiteren Verschieben des Dämpfungskolbens 13 das Hydraulikmedium aus dem Druckraum 15 über die axiale Bohrung 31 und den Steuerquerschnitt 30 in den Ringkanal 25 verdrängt werden. Von hier aus kann das Hydraulikmedium über die Bohrung 26 zurück zum Reservoir 18 strömen.

Aufgrund des Steuerquerschnitts 30 ergibt sich ein anderes Kennlinienverhalten in bezug auf den im Druckraum 15 herrschenden Hydraulikdruck. Sobald die Ankerachse 5 beim Bestromen der Spule 3 verschoben wird, nimmt der Hub des Ankers 6 zunächst linear während der Freiflugphase 28 zu. Sobald die Ankerachse 5 am Ende der Freiflugphase 28 auf den Dämpfungskolben 23 trifft, wird die Freifluggeschwindigkeit des Ankers 6 entsprechend der abbiegenden Hubkennlinie stark verringert und innerhalb kürzester Zeit auf Null gebracht. Entsprechend nimmt der Druck des Hydraulikmediums im Druckraum 15 zu, sobald der Dämpfungskolben 23 von der Ankerachse 5 verschoben wird. Der Druckanstieg erfolgt rasch innerhalb kürzester Zeit bis zu einem Maximum. Im Gegensatz zur vorigen Ausführungsform nimmt der Druck des Hydraulikmediums im Druckraum 15 innerhalb kürzester Zeit nahezu schlagartig ab, sobald der Dämpfungskolben 23 seine Endlage erreicht hat. In dieser Endstellung ist, wie anhand von Fig. 3c erläutert worden ist, der Druckraum 15 über die axiale Bohrung 31, den Steuerquerschnitt 30, den Ringkanal 25 und die Bohrung 26 mit dem Reservoir 18 leitungsverbunden. Das Hydraulikmedium kann darum in der Endstellung des Dämpfungskolbens 23 zum Reservoir 18 abfließen. Auf diese Weise wird erreicht, daß der elektromagnetischen Haltekraft des Elektroantriebes 1 nur eine sehr geringe hydraulische Gegenkraft entgegenwirkt. Aufgrund der Entlastung über die beiden Bohrungen 30, 31 ist zum Halten des Ankers 6 in der Endstellung bei bestromter Spule 3 eine wesentlich niedrigere Magnetkraft notwendig als beim Ausführungsbeispiel gemäß Fig. 1. Die Kennlinie des Magneten selbst kann unverändert bleiben. Bis zum Maximum des Drucks des Hydraulikmediums erfolgt in der Zeit 35 der Druckaufbau, während der Druckabbau bei Öffnen der Leitungsverbindung zwischen dem Druckraum 15 und dem Reservoir 18 über die Bohrungen 30, 31 innerhalb der Zeit 36 wieder abgebaut wird.

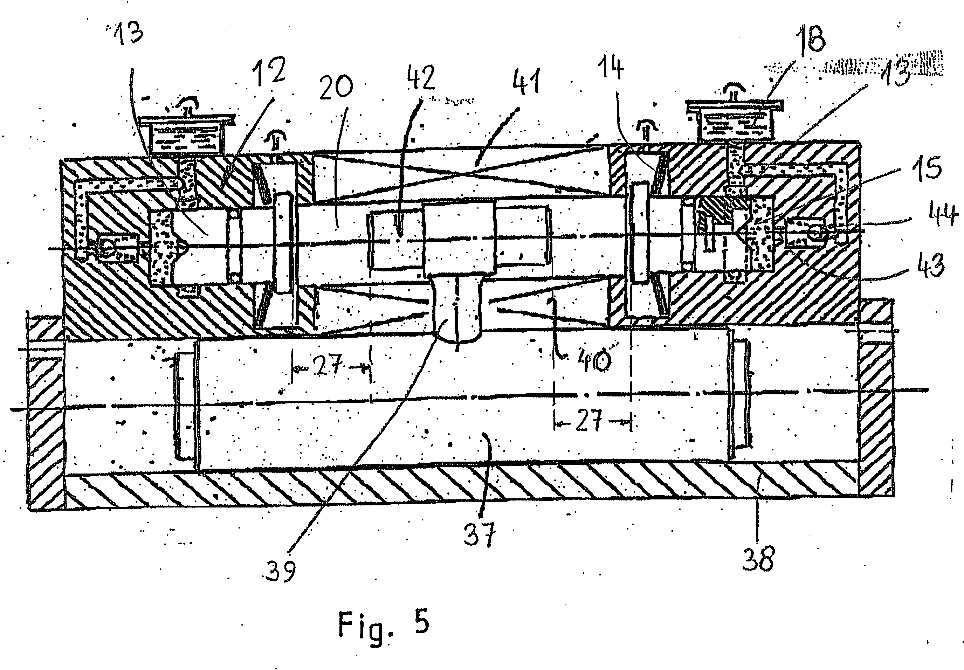

Während bei den vorigen Ausführungsbeispielen die Kolbenachse 5 nur in einer Verschieberichtung eine Freiflugstrecke 27 aufweist, sind bei der Ausführungsform nach Fig. 5 zwei solcher Freiflugstrecken 27 vorgesehen. Ein Übertragungselement 42 ist an ein Bauteil 37 angeschlossen, das ein Anker sein kann, aber auch jedes andere geeignete, beispielsweise hydraulisch, pneumatisch oder auch mechanisch angetriebene Element sein kann. Es ist in einem Gehäuseteil 38 verschiebbar gelagert. In halber Länge ist das Antriebselement 37 mit einem radial abstehenden Steg 39 versehen, der durch einen Längsschlitz 40 in der Wandung des Gehäuseteiles 38 ragt und an dem das Übertragungselement 42 befestigt ist. Der Längsschlitz 40 hat eine solche Länge, daß der Betätigungskolben im gewünschten Maße verschoben werden kann. Auf der dem Längsschlitz 40 gegenüberliegenden Seite ist der Gehäuseteil 12 mit einem weiteren Längsschlitz 41 versehen. Dadurch besteht eine Verbindung zwischen dem das Übertragungselement 42 aufnehmendem Raum 20 und dem Umgebungsraum.

Zu beiden Seiten des Übertragungselementes 42 ist jeweils ein Dämpfungskolben 13 vorgesehen. Der in Fig. 5 linke Dämpfungskolben ist entsprechend Fig. 1 und der in Fig. 5 rechte Dämpfungskolben entsprechend Fig. 3 ausgebildet. Die beiden Dämpfungskolben können auch gleich entsprechend Fig. 1 oder Fig. 3 ausgebildet sein. Auch die zugehörigen Dämpfungseinrichtungen sind entsprechend ausgebildet.

Wird das Antriebselement 37 beispielsweise aus der in Fig. 5 dargestellten Mittelstellung nach rechts verschoben, trifft das Übertragungselement 42 nach Überwinden der Freiflugstrecke 27 auf den Dämpfungskolben 13. Er wird dann gegen die Kraft der Rückstellfeder 14 und den im Druckraum 15 sich aufbauenden Druck mitgenommen. Der Druckaufbau und der Druckabbau beim Verschieben dieses in Fig. 5 rechten Dämpfungskolbens 13 erfolgen in der Weise, wie es anhand der Fig. 3 und 3a bis 3c erläutert worden ist. An den Druckraum 15 schließt eine Bohrung 43 an, in der ein Rückschlagventil 44 sitzt. Über diese Bohrung 43 ist der Druckraum 15 mit dem Reservoir 18 verbunden, das im Unterschied zur Ausführungsform nach Fig. 3 außerhalb des Gehäuseteiles 12 angeordnet ist. Das Reservoir 18 kann selbstverständlich auch, wie bei der Ausführungsform nach Fig. 3, in den Gehäuseteil 12 integriert sein. In diesem Falle ist die Bohrung 43 nicht erforderlich. Das Rückschlagventil 44 sitzt, wie Fig. 3 zeigt, bei einer solchen Ausbildung innerhalb des Gehäuseteiles 12 zwischen dem Druckraum 15 und dem außerhalb des Gehäuseteiles 12 befindlichen Reservoir 18. Das Rückschlagventil 44 sorgt wie bei den vorhergehenden Ausführungsformen dafür, daß beim Verschieben des Dämpfungskolbens 13 durch die Ankerachse 5 der Druckraum 15 gegenüber dem Reservoir 18 geschlossen ist.

Je nach Verschieberichtung des Übertragungselementes 42 wird nach Überwinden der jeweiligen Freiflugstrecke 27 der entsprechende Dämpfungskolben 13 verschoben. Bei dieser Freiflugbewegung wird lediglich gegen den Luftwiderstand gearbeitet, da sich in der Bohrung 20 lediglich Luft befindet. Anstelle des Längsschlitzes 41 kann in der Wandung des Gehäuseteiles 12 auch eine Nut vorgesehen sein. Beim Verschieben des Übertragungselementes 42 in der Bohrung 20 wird dann zwischen den beiderseits des Übertragungselementes befindlichen Räumen die Luft über diese Nut umgewälzt. Im übrigen arbeitet die Dämpfungseinrichtung entsprechend den vorhergehenden Ausführungsbeispielen.

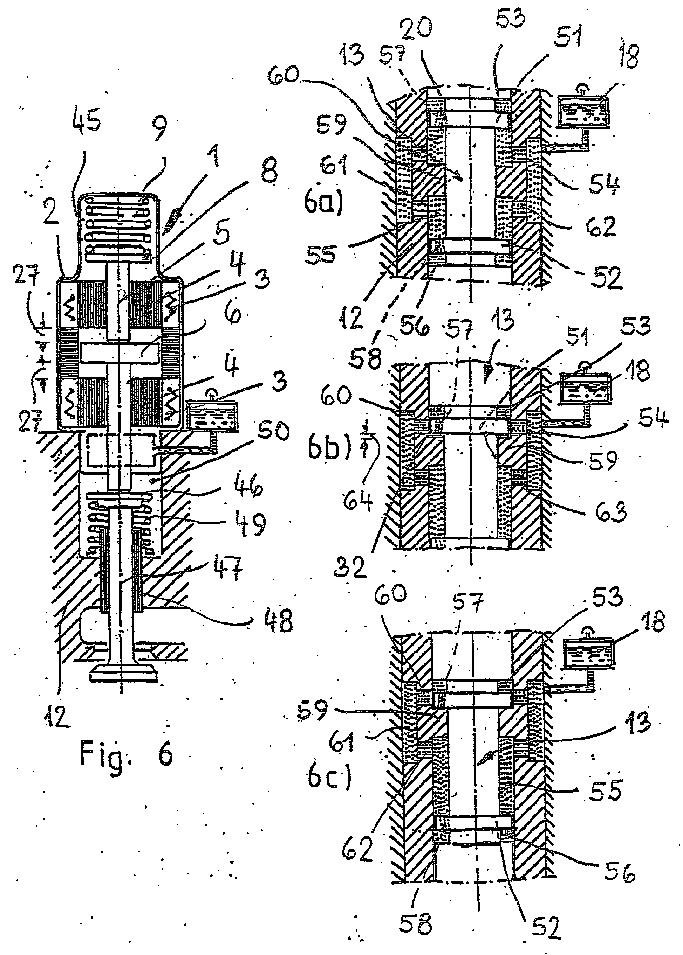

Fig. 6 zeigt eine besonders kompakte Ausbildung der Dämpfungseinrichtung. Auf der Ankerachse 5 sitzt der Flachanker 6, der zwischen zwei Kernen 4 des Elektroantriebes 1 verschiebbar ist. Das Gehäuse 2 des Elektroantriebes 1 hat eine Verlängerung 45, in der die Druckfeder 9 untergebracht ist, mit welcher die Ankerachse 5 belastet wird. Die Druckfeder 9 stützt sich auf dem auf der Ankerachse 5 sitzenden Federteller 8 sowie am Boden der Gehäuseverlängerung 45 ab. Die Ankerachse 5 liegt an einem Federteller 46 an, der am freien Ende des Ventilschaftes 47 befestigt ist. Er ist in einem Lager 48 geführt. Der Federteller 46 und eine den Ventilschaft 47 belastende Druckfeder 49 liegen in einem Aufnahmeraum 50 des Gehäuseteiles 12.

Der Anker 6, der entsprechend den vorhergehenden Ausführungsformen als Flachanker ausgebildet ist, hat entsprechend der Ausführungsform nach Fig. 5 zwei Freiflugstrecken 27. In Fig. 6 ist die Dämpfungseinrichtung 13 lediglich schematisch durch eine strichpunktierte Linie dargestellt. Anhand der Fig. 6a bis 6c wird die Ausbildung dieser Dämpfungseinrichtung 13 im einzelnen beschrieben.

Fig. 6a zeigt den Dämpfungskolben 13 in seiner Mittelstellung, die der Mittelstellung des Ankers 6 gemäß Fig. 6 entspricht. Der Dämpfungskolben 13 hat zwei Stege 51, 52, mit denen er abgedichtet in der Bohrung 20 des Gehäuseteiles 12 geführt ist. Die beiden Stege 51, 52 trennen jeweils zwei Hydraulikräume 53, 54 und 55, 56 voneinander. Beide Stege 51, 52 sind mit jeweils wenigstens einer sie durchsetzenden Bohrung 57, 58 versehen, über welche die Druckräume 53 und 54 bzw. 55 und 56 miteinander verbunden sind. Die beiden benachbarten Druckräume 54 und 55 sind durch einen radial nach innen ragenden Flansch 59 des Gehäuseteiles 12, an dem der Dämpfungskolben 13 abgedichtet anliegt, voneinander getrennt.

Der Druckraum 54 ist über eine Bohrung 60 mit einem Ringkanal 61 verbunden, der im Gehäuseteil 12 vorgesehen ist. Über mindestens eine weitere Bohrung 62 ist auch der Hydraulikraum 55 mit dem Ringkanal 61 verbunden.

In der Stellung gemäß Fig. 6 nimmt der Dämpfungskolben 13 seine Mittelstellung ein, in der die Bohrung 60 offen ist. Das Hydraulikmedium in den Hydraulikräumen 54, 55, in den Bohrungen 60, 62 und im Ringkanal 61 steht somit nicht unter Druck. Wird nun der Elektroantrieb 1 (Fig. 6) betätigt und eine seiner beiden Spulen 3 erregt, wird der Dämpfungskolben 13 durch die Ankerachse 5, je nach erregter Spule 3, in der entsprechenden Richtung verschoben. Wird der Dämpfungskolben 13 aus der Mittelstellung gemäß Fig. 6a nach unten in Richtung auf den Ventilschaft 47 verschoben, wird durch den Steg 51 des Dämpfungskolbens 13 das Hydraulikmedium im Hydraulikraum 54 unter Druck gesetzt, da das Hydraulikmedium über die Bohrung 60 in den Ringkanal 61 und von dort über die Bohrung 62 in den Hydraulikraum 55 verdrängt werden muß. In dem Maße, in dem das Volumen des Hydraulikraums 54 verringert wird, wird das Volumen des Hydraulikraums 55 vergrößert. Das Hydraulikmedium wird auf diese Weise lediglich zwischen den beiden Hydraulikräumen 54 und 55 verschoben bzw. umgewälzt.

In der Stellung gemäß Fig. 6b hat eine Steuerkante 63 des Steges 51 des Dämpfungskolbens 13 den Durchlaßquerschnitt an der Bohrung 60 mit Überdeckung Null geschlossen. In dieser Stellung hat der Steg 51 noch einen geringen Abstand 64 vom Gehäuseflansch 59. Dadurch wird das in diesem noch verbleibenden kleinen Volumen des Hydraulikraums 54 befindliche Hydraulikmedium unter Druck gesetzt. Über die Bohrung 57 im Steg 51 wird auch das im Hydraulikraum 53 befindliche Hydraulikmedium unter den gleichen Druck gesetzt. In dieser Stellung des Dämpfungskolbens 13 ist somit die Abbremsung beendet.

Damit der Dämpfungskolben 13 aus der Stellung gemäß Fig. 6b weiter in die Stellung gemäß Fig. 6c verschoben werden kann, ist wiederum die als Ringspalt ausgebildete Drosselstelle 32 vorgesehen, über welche der Hydraulikraum 54 mit der Bohrung 60 verbunden ist. Über die Drosselstelle 32 kann das Hydraulikmedium beim weiteren Verschieben des Dämpfungskolbens 13 aus dem Hydraulikraum 54 in die Bohrung 60 fließen. Der Dämpfungskolben 13 wird so lange verschoben, bis er nur noch geringen Abstand vom gehäuseseitigen Flansch 59 hat (Fig. 6c). Bei diesem weiteren Verschieben wird die Bohrung 60 geöffnet, so daß das Hydraulikmedium aus dem Hydraulikraum 54 in die Bohrung 57, den Hydraulikraum 53 und die Bohrung 60 in den Ringkanal 61 verdrängt werden kann. Auf diese Weise wird der Druck abgebaut. Das Hydraulikmedium kann aus dem Ringkanal 61 über die Bohrung 62 in den Hydraulikraum 55 sowie über die Bohrung 58 im Kolbensteg 52 in den Hydraulikraum 56 verdrängt werden.

Der Ringkanal 61 ist, wie in den Fig. 6 und 6a bis 6c schematisch dargestellt ist, mit dem Reservoir 18 für das Hydraulikmedium verbunden, das innerhalb des Gehäuseteiles 12 oder außerhalb von ihm angeordnet sein kann.

Wird der Kolben 6 in die andere Richtung verschoben, dann wird das Hydraulikmedium in der beschriebenen Weise, ausgehend von der Mittelstellung gemäß Fig. 6a, aus dem Hydraulikraum 55 in umgekehrter Richtung verdrängt. Die beschriebene Funktion des Verdrängens des Hydraulikmediums, des Dämpfungsvorganges und des Druckabbaus erfolgt in gleicher Weise, jedoch in umgekehrter Richtung.

Die Bohrungen 60, 62 müssen nicht kreisförmigen Querschnitt haben, sondern können jeden anderen geeigneten, an den jeweiligen Anwendungsfall angepaßten Querschnitt haben. Anstelle der Bohrungen 60, 62 ist auch ein Ringkanal möglich.

Die Dämpfungseinrichtung 13 ist, wie in Fig. 6 durch strichpunktierte Linien angedeutet ist, innerhalb des Elektroantriebes 1 im Aufnahmeraum 50 untergebracht. Der Dämpfungskolben 13 ist in diesem Falle vorteilhaft durch einen Teil der Ankerachse 5 gebildet. Der Dämpfungskolben 13 kann aber auch beispielsweise im Bereich der Druckfeder 9 innerhalb des Elektroantriebes 1 untergebracht sein. Bei der beschriebenen Ausführungsform wird im Gegensatz zum Ausführungsbeispiel nach Fig. 5 nicht Luft, sondern Hydraulikmedium verdrängt.

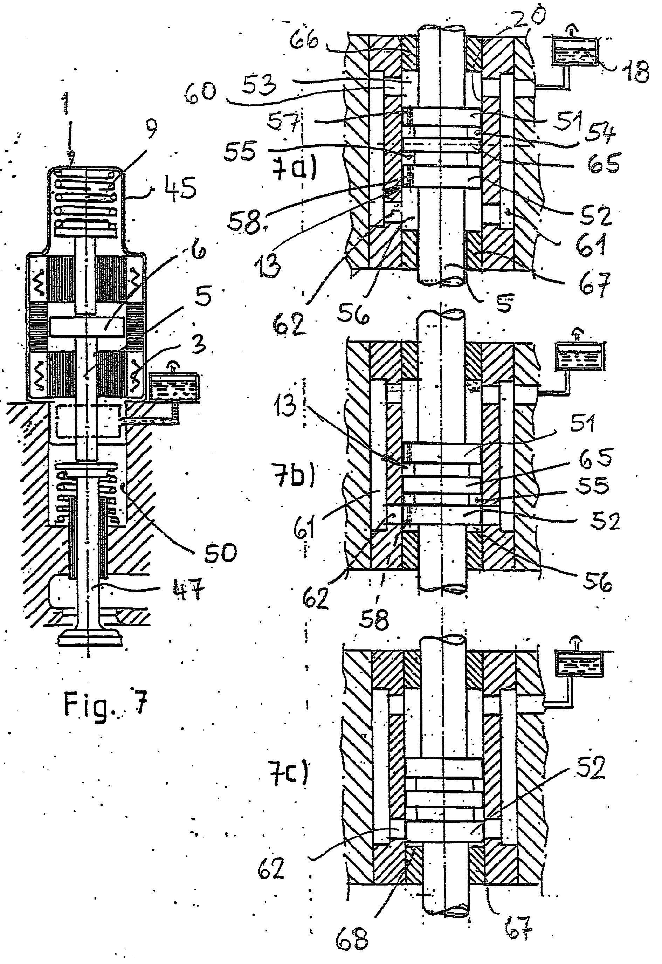

Die Fig. 7 und 7a bis 7c zeigen eine Dämpfungseinrichtung, die ähnlich ausgebildet ist wie das vorige Ausführungsbeispiel. Der Dämpfungskolben 13 ist wiederum im Aufnahmeraum 50 untergebracht, kann aber beispielsweise auch in der die Druckfeder 9 aufnehmenden Gehäuseverlängerung 45 angeordnet sein. Im dargestellten Ausführungsbeispiel ist der Dämpfungskolben 13 wiederum Bestandteil der Ankerachse 5. Sie trägt drei mit Abstand voneinander liegende Ringstege 51, 52, 65, von denen die beiden äußeren Ringstege 51, 52 gleich breit und breiter sind als der mittlere Ringsteg 65. Fig. 7a zeigt die Mittel- bzw. Ausgangsstellung des Dämpfungskolbens 13. Die beiden äußeren Ringstege 51, 52 begrenzen jeweils einen Hydraulikraum 53, 56, der auf der gegenüberliegenden Seite jeweils von einem Lager 66, 67 für die Ankerachse 5 begrenzt wird. Die beiden Ringstege 51, 52 sind jeweils mit einer Durchgangsbohrung 57, 58 versehen, über welche die Hydraulikräume 53, 56 mit den Hydraulikräumen 54, 55 verbunden sind, die zwischen den beiden äußeren Ringstegen 51, 52 und dem mittleren Ringsteg 65 vorgesehen sind. Der mittlere Ringsteg 65 liegt dichtend an der Wandung der Bohrung 20 an. Die beiden Hydraulikräume 53, 56 sind durch jeweils wenigstens eine Bohrung 60, 62 mit dem Ringkanal 61 verbunden, der mit dem Reservoir 18 für das Hydraulikmedium verbunden ist.

In den Fig. 7a bis 7c sind entsprechend der vorigen Ausführungsform drei verschiedene Stellungen dargestellt, wenn sich der Dämpfungskolben 13 aus der Mittelstellung gemäß Fig. 7a nach unten bewegt, um den Ventilschaft 47 (Fig. 7) in der Darstellung gemäß Fig. 7 nach unten zu verschieben. Die entsprechende Spule 3 des Elektroantriebes 1 wird erregt, so daß der auf der Ankerachse 5 sitzende Anker 6 in der entsprechenden Richtung bewegt wird. Beim Verschieben des Dämpfungskolbens 13 in Fig. 7 nach unten wird das Hydraulikmedium in der anhand des vorigen Ausführungsbeispieles beschriebenen Weise über die Bohrung 62 in den Ringkanal 61 und von dort über die Bohrung 60 in den Hydraulikraum 53 verdrängt. Sobald der Steg 52 mit der Bohrung 62 zusammenwirkt, wird der Durchlaßquerschnitt ständig verringert und damit das Hydraulikmedium im Hydraulikraum 52 unter ansteigenden Druck gesetzt. Der Steg 52 gelangt schließlich in eine Stellung, in welcher er die Bohrung 62 mit Überdeckung schließt. Dadurch ist das in dem nunmehr sehr kleinen Hydraulikraum 56 befindliche Hydraulikmedium unter Druck gesetzt. Über die Bohrung 58 des Steges 52 steht auch das zwischen den beiden Ringstegen 52, 65 im Hydraulikraum 55 befindliche Hydraulikmedium unter dem gleichen Druck wie im Hydraulikraum 56. In dieser Stellung ist die Abbremsung des Dämpfungskolbens 13 beendet.

Wie schon bei der vorigen Ausführungsform kann der Dämpfungskolben 13 aus der Stellung gemäß Fig. 7b weiter in die Stellung gemäß Fig. 7c verschoben werden, in welcher die Bohrung 62 durch die andere Kante des Ringsteges 52 wieder geöffnet ist. Das Hydraulikmedium kann darum aus dem Hydraulikraum 56 über die Bohrung 58 im Ringsteg 52, den Hydraulikraum 55 und die Bohrung 62 in den Ringkanal 61 verdrängt werden. Auf diese Weise wird der Druck im Hydraulikmedium abgebaut. In der Stellung gemäß Fig. 7c liegt der Ringsteg 52 mit geringem Abstand zur Stirnseite 68 der Lagerbuchse 67.

Im übrigen ist dieses Ausführungsbeispiel gleich ausgebildet wie die vorige Ausführungsform. Auch die Funktionsweise ist die gleiche wie beim Ausführungsbeispiel nach Fig. 6.

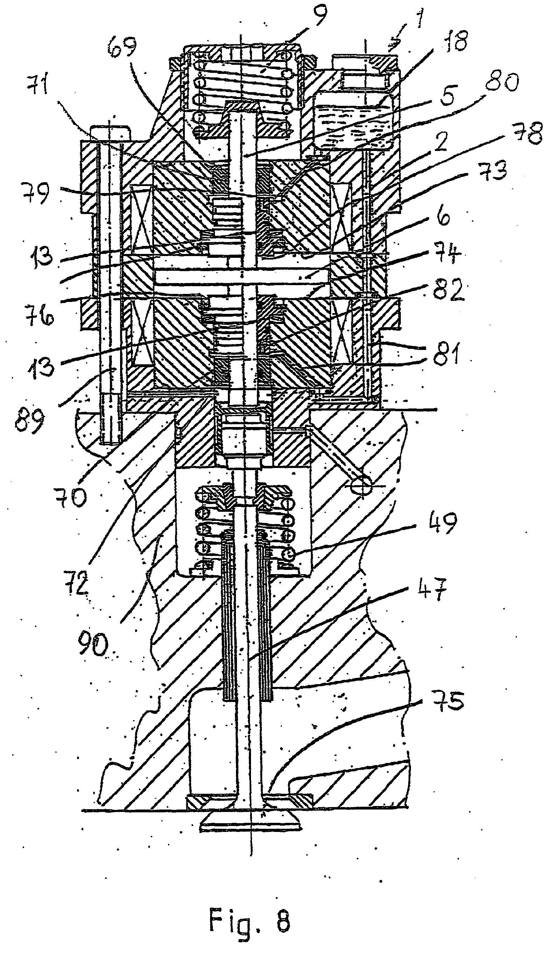

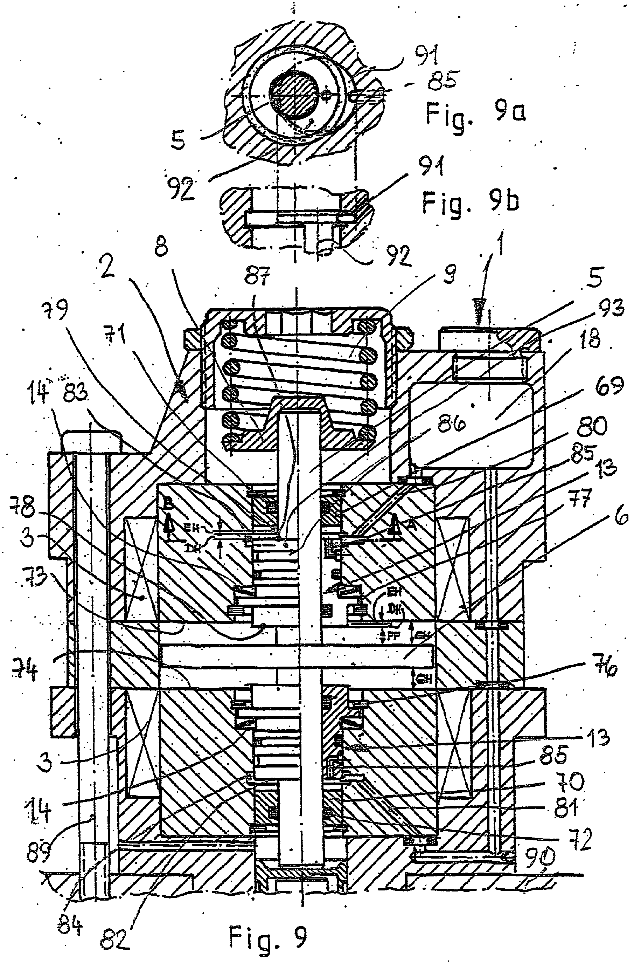

Die Fig. 8, 9, 9a und 9b zeigen eine Ausführungsform, bei welcher die Dämpfungskolben 13 nicht durch einen Teil der Ankerachse 5 gebildet sind, sondern als gesonderte Elemente auf der Ankerachse angeordnet sind. Der auf der Ankerachse 5 befestigte Anker 6 liegt nicht im Hydraulikmedium, sondern ist von Luft umgeben. Darum muß der Anker 6 bei der noch zu beschreibenden Funktion dieser Dämpfungseinrichtung im Freiflug nur gegen den Luftwiderstand und die Differenzkraft der beiden Federn 9, 49 verschoben werden, mit denen die Ankerachse 5 und der Ventilschaft 47 belastet sind. Die beiden Dämpfungskolben 13 sind als Hohlkolben ausgebildet, die auf der Ankerachse 5 sitzen. Sie wird durch die beiden Lager 69, 70 geführt, in denen jeweils eine Dichtung 71, 72 zur Abdichtung der Ankerachse 5 untergebracht ist.

Das vom Ventilschaft 47 abgewandte Ende der Ankerachse 5 trägt den Federteller 8, auf dem sich die Druckfeder 9 abstützt.

Die beiden Dämpfungskolben 13 liegen beiderseits des Ankers 6 und sind gleich ausgebildet, jedoch spiegelsymmetrisch zueinander angeordnet.

Die Fig. 8 und 9 zeigen den Anker 6 in seiner Mittelstellung, in der er sich im Bereich zwischen den beiden gehäuseseitigen Anschlagflächen 73, 74 befindet. Wird das am freien Ende des Ventilschaftes 47 befindliche Ventil 75 (Fig. 8) geschlossen, bewegt sich der Ventilschaft 47 und damit die Ankerachse 5 in der Darstellung gemäß Fig. 8 nach oben. Der untere Dämpfungskolben 13 liegt unter der Kraft der vorteilhaft als Tellerfeder ausgebildeten Rückstellfeder 14 (Fig. 9) an einem gehäuseseitigen Sicherungsring 76 an. Auch der obere Dämpfungskolben 13 liegt unter der Kraft der Rückstellfeder 14 an einem gehäuseseitigen Sicherungsring 77 an. Die dem unteren Dämpfungskolben 13 zugewandte Stirnseite 78 steht über die Anschlagfläche 73 vor. Dieser Überstand entspricht dem Dämpfungshub DH und dem Entlastungshub EH (Fig. 9), deren Funktion noch beschrieben werden wird. Wird das Ventil 75 geschlossen und der Ventilschaft 47 dementsprechend nach oben bewegt, wird die Ankerachse 5, die mit dem Ventilschaft 47 wirkverbunden ist, entsprechend mitgenommen. Der Anker 6 bewegt sich darum über die Freiflugstrecke FF (Fig. 9), bis er an der Stirnseite 78 des oberen Dämpfungskolbens 13 zur Anlage kommt. Beim weiteren Verschieben wird nunmehr der Dämpfungskolben 13 gegen die Kraft der Druckfeder 14 mitgenommen. Der Abstand des Dämpfungskolbens 13 vom oberen Lager 69 ist größer als der Gesamthub GH (Fig. 9) des Ankers. Dadurch ist gewährleistet, daß der obere Dämpfungskolben 13 in der Anschlagstellung des Ankers 6 an diesem Dämpfungskolben noch Abstand vom Lager 69 hat. Dadurch wird zwischen dem Lager 69 und dem Dämpfungskolben 13 ein geschlossener Hydraulikraum 79 gebildet. Das Gehäuse 2 des Elektroantriebes 1 enthält das Reservoir 18 für das Hydraulikmedium, das über zwei Leitungen 80, 81 dem in Fig. 9 oberen Hydraulikraum 79 sowie dem in Fig. 9 unteren Hydraulikraum 82 zugeführt wird. Die beiden Hydraulikräume 79, 82 stehen jeweils mit einem gehäuseseitigen Ringkanal 83, 84 in Verbindung. In der Mittelstellung des Ankers 6 sind die Ringkanäle 83, 84 mit den entsprechenden Hydraulikräumen 79, 82 verbunden. Wird der obere Dämpfungskolben 13 durch den Anker 6 nach Ende der Freiflugstrekke FF mitgenommen, wird durch den Dämpfungskolben 13 der als Ringkanal 83 ausgebildete Steuerquerschnitt verkleinert und schließlich verschlossen. Das im Hydraulikraum 79 befindliche Hydraulikmedium wird dementsprechend unter ständig steigenden Druck gesetzt, bis beim Schließen der Verbindung zum Ringkanal 83 der erforderliche Bremsdruck erreicht ist. Dieser Druckaufbau findet innerhalb des Dämpfungshubes DH des Dämpfungskolbens 13 statt. Wie bei den beiden vorigen Ausführungsbeispielen kann der Dämpfungskolben 13 im Anschluß an den Dämpfungshub DH noch einen Entlastungshub EH ausführen, während dem der Druck im Hydraulikraum 79 abgebaut wird. Bei diesem Entlastungshub EH wird der Ringkanal 83 durch die gegenüberliegende Kante 86 des Ringsteges 93 des Dämpfungskolbens 13 wieder geöffnet. Das Hydraulikmedium kann darum aus dem Hydraulikraum 79 über eine Bohrung 85 in den Ringkanal 83 und von dort aus über die Leitung 80 in das Reservoir 18 verdrängt werden. Auf diese Weise wird der Druck im Hydraulikmedium abgebaut.

Wenn der Anker 6 an der Anschlagfläche 73 anschlägt, hat die Stirnfläche 87 des Dämpfungskolbens 13 Abstand von der Lagerbuchse 69.

Wird die Ankerachse 5 nach unten verschoben, erfolgen die beschriebenen Bewegungsabläufe dementsprechend am unteren Dämpfungskolben 13.

Das Reservoir 18 ist, wie auch bei den vorhergehenden Ausführungsformen, nicht voll mit Hydraulikmedium gefüllt, so daß das beim Dämpfungshub DH und beim Entlastungshub EH verdrängte Hydraulikmedium vom Reservoir 18 aufgenommen werden kann. Der Elektroantrieb 1 selbst hat wiederum die beiden Spulen 3, die beiderseits des Ankers 6 mit Abstand voneinander liegen. Das Gehäuse 2 des Elektroantriebes 1 besteht aus drei Teilen, die aufeinandergesetzt und durch Schrauben 89 miteinander auf einem Motorblock 90 oder dergleichen festgeschraubt werden. Aufgrund der mehrteiligen Ausbildung des Gehäuses 2 können die verschiedenen Bauteile einfach eingebaut und bei Bedarf auch ausgebaut werden.

Um eine herstellungstechnisch einfache Verbindung zwischen den Ringkanälen 83, 84 und den Leitungen 80, 81 zu erreichen, ist im Verbindungsbereich eine Tasche 91 (Fig. 9a) mit einem T-nutenförmigen Fräser 92 eingearbeitet. In Draufsicht hat die Tasche 91 somit Sichelform.

Beim beschriebenen Hochfahren des oberen Dämpfungskolbens 13 wird das Volumen des Hydraulikraums 79 stetig verkleinert. Gleichzeitig wird auch der freie Steuerquerschnitt des Ringkanals 83 stetig verringert. Die Verdrängung des Hydraulikmediums aus dem Hydraulikraum 79 in den Ringkanal 83 wird dadurch gedrosselt, wodurch die Dämpfungswirkung erreicht wird. Die Breite des den Ringkanal 79 verschließenden Steges 93 des Dämpfungskolbens 13 entspricht der Querschnittsbreite des Ringkanales 83. Dadurch wird unmittelbar nach Schließen dieses Steuerquerschnittes beim weiteren Verschieben des Dämpfungskolbens 13 der Steuerquerschnitt wieder geöffnet, so daß das Hydraulikmedium in der beschriebenen Weise aus dem Hydraulikraum 79 über die Bohrung 85 im Dämpfungskolben 13 in den Ringraum 83 entweichen kann. Vorteilhaft wird die mantelseitige Mündung der Bohrung 85 durch eine Ringnut gebildet, so daß über den gesamten Umfang des Dämpfungskolbens 13 während des Entlastungshubes EH das Hydraulikmedium in der beschriebenen Weise aus dem Hydraulikraum 79 in den gehäuseseitigen Ringkanal 83 verdrängt werden kann.

Soll die Ankerachse 5 in den Fig. 8 und 9 nach unten verschoben werden, wird die untere Spule 3 des Elektroantriebes 1 bestromt. Der obere Dämpfungskolben 13 wird unter der Kraft der Druckfeder 14 nach unten verfahren. Sobald der obere Dämpfungskolben 13 am Sicherungsring 77 zur Anlage kommt, bleibt der obere Dämpfungskolben 13 in seiner dargestellten Lage. Nunmehr treten die beschriebenen Bewegungsabläufe am unteren Dämpfungskolben 13 in entgegengesetzter Richtung auf.

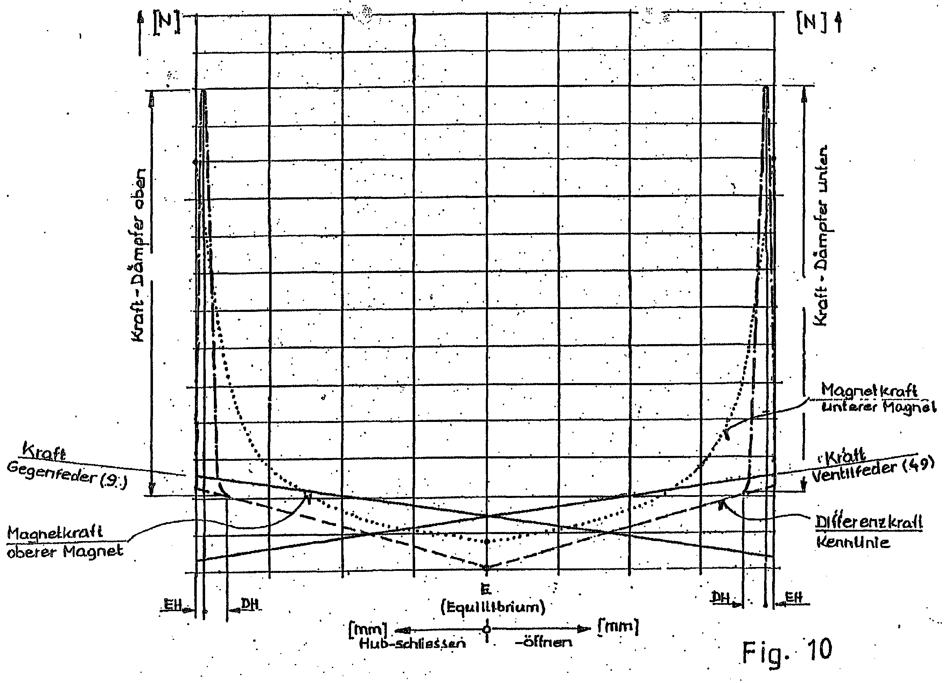

Die den Ventilschaft 47 belastende Druckfeder 49 sowie die die Ankerachse 5 belastende Druckfeder 9 haben gleiche Federkennlinien (Fig. 10). Dadurch wird die in den Fig. 8 und 9 dargestellte Mittelstellung des Ankers 6 bei nicht bestromtem Elektroantrieb 1 erreicht. Die Druckfedern 9, 49 können auch unterschiedliche c-Werte haben, müssen aber so dimensioniert sein, daß die Mittelstellung des Ankers 6 eingestellt werden kann.

In Fig. 10 sind die Federkennlinien der beiden Druckfedern 9, 49 und die daraus resultierende Differenzkraft dargestellt. Die beiden Federkennlinien verlaufen gegensinnig zueinander. Wird in der beschriebenen Weise einer der beiden Dämpfungskolben 13 verschoben, dann addiert sich zu der Differenzkraft, sobald der Ringkanal 83 bzw. 84 geschlossen wird, entsprechend dem Druckaufbau im Hydraulikraum 79 bzw. 82 eine zusätzliche Kraft (Dämpfungshub DH). Die Magnetkraft des Elektromagneten 1 muß größer sein als die Summe aus Differenzkraft und überlagerter Dämpfungskraft. Aufgrund der internen Bohrung 85 des Dämpfungskolbens 13 wird erreicht, daß der Druck infolge des Entlastungshubes EH des Dämpfungskolbens 13 rasch abgebaut wird, sobald beim weiteren Hub des Dämpfungskolbens der Steuerquerschnitt des Ringkanales 83, 84 wieder geöffnet wird. Die Gesamtkraft am Hubende des Dämpfungskolbens 13 wird somit auf die Differenzkraft verringert, so daß eine Änderung der Magnetkraft nicht erforderlich ist.

Als Antrieb kann nicht nur der beschriebene und dargestellte Elektroantrieb 1 in Form des Elektromagneten verwendet werden. Es können andere Antriebe eingesetzt werden, die pneumatisch, elektrisch, mechanisch, piezoelektronisch und dergleichen arbeiten.

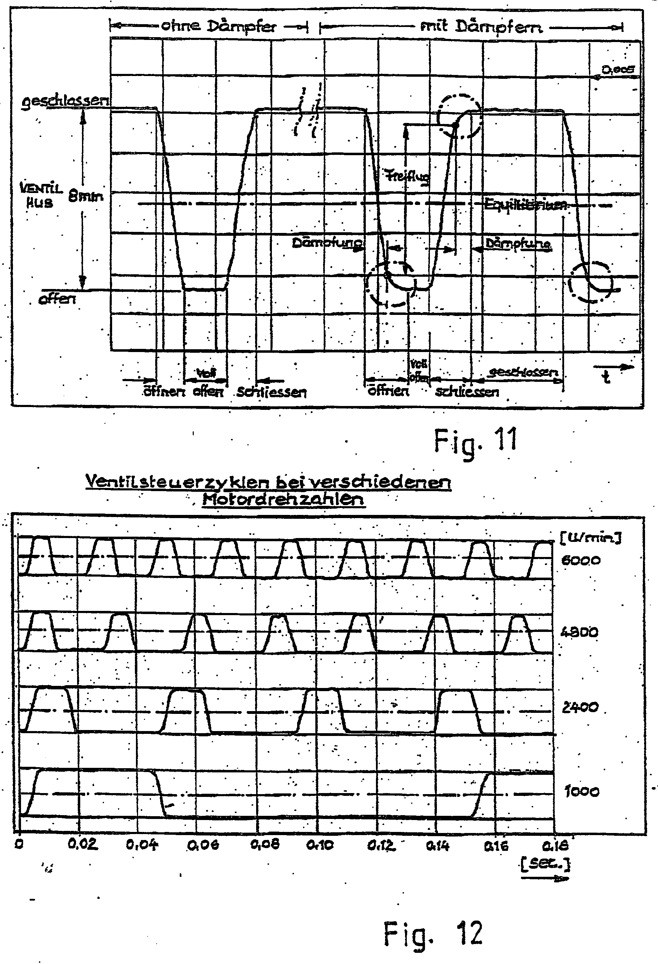

Fig. 11 zeigt beispielhaft die Wirkung der Dämpfungseinrichtung beim Schließen und Öffnen eines Ventiles eines Kraftfahrzeuges. In der linken Hälfte ist das Verhalten ohne Dämpfer, in der rechten Hälfte mit Verwendung der beschriebenen Dämpfungseinrichtung dargestellt. Arbeiten die Ventile ohne Dämpfer, dann erfolgen sowohl beim Schließen als auch beim vollen Öffnen des Ventiles abrupte Bewegungsabläufe. Bei Einsatz der Dämpfungseinrichtung erfolgt hingegen der Übergang zum Schließen bzw. Öffnen des Ventils kontinuierlich und stetig, was in Fig. 11 jeweils durch strichpunktierte Kreise kenntlich gemacht ist.

Fig. 12 zeigt beispielhaft Ventilsteuerzyklen bei unterschiedlichen Motordrehzahlen. Je nach Drehzahl des Motors ist innerhalb vorgegebener Zeiten eine unterschiedliche Zahl von Dämpfungsvorgängen erforderlich, die jeweils innerhalb der gleichen Zeit ablaufen.

## Patentansprüche

1. Anordnung,
umfassend ein vorzugsweise elektromagnetisches Antriebssystem, insbesondere für nockenwellenlose elektromagnetische Ventilsteuerungen in Verbrennungsmotoren, mit einer zu bewegenden Masse (5, 6, 47, 75, 37, 42) und mindestens ein Dämpfungselement, das eine der zu bewegenden Masse (5, 6, 47, 75, 37, 42) entgegengerichtete Kraft ausübt und ein Dämpfungskolben (13) ist,
der einen Druckraum (15, 54, 55, 79, 82) begrenzt, **dadurch gekennzeichnet, dass** in den Druckraum (15, 54, 55, 79, 82) mindestens eine Hydraulikleitung (25, 60, 62, 80, 81) mündet,
die beim Verschieben des Dämpfungskolbens (13) entlang eines Verschiebeweges durch die zu bewegende Masse (5, 6, 47, 75, 37, 42) unter Verdrängung des Hydraulikmediums aus dem Druckraum (15, 54, 55, 79, 82) und unter Aufbau eines Hydraulikdruckes im Druckraum derart verschließbar ist, dass mit zunehmendem Verschiebeweg des Dämpfungskolbens (13) der Hydraulikdruck zunimmt,
und
die zu bewegende Masse (5, 6, 47, 75, 37, 42) in einer Ausgangsstellung Abstand (27) vom Dämpfungskolben (13) hat, so dass die Anordnung eine Freiflugstrecke aufweist, in deren Bereich zum Verschieben der zu bewegenden Masse (5, 6, 47, 75, 37, 42) anfänglich nur eine geringe Kraft erforderlich ist, und
die zu bewegende Masse (5, 6, 47, 75, 37, 42) nach Überwindung der Freiflugstrecke auf den Dämpfungskolben (13) trifft, bei dessen Verschieben ein Durchflussquerschnitt der Hydraulikleitung (25, 60, 62, 80, 81) für das Hydraulikmedium aus dem Druckraum (15, 54, 55, 79, 82) in die Hydraulikleitung (25, 60, 62, 80, 81) stetig verringerbar ist.

2. Anordnung nach Anspruch 1,
**dadurch gekennzeichnet, daß** der Dämpfungskolben (13) in seiner den Druckraum (15) begrenzenden Stirnseite (22) und/oder ein Gehäuse (2) mindestens eine Vertiefung (23) mit sich vorzugsweise in Richtung auf die Stirnseite (22) des Dämpfungskolbens (13) erweiterndem Querschnitt aufweist, über die eine Verbindung zwischen dem Druckraum (15) und der Hydraulikleitung (25) herstellbar ist.

3. Anordnung nach einem der Ansprüche 1 bis 2,
**dadurch gekennzeichnet, daß** die Hydraulikleitung (25, 60, 62, 80, 81) mit einem Reservoir (18) für das Hydraulikmedium leitungsverbunden ist.

4. Anordnung nach einem der Ansprüche 1 bis 3,
**dadurch gekennzeichnet, daß** der Dämpfungskolben (13) mindestens einen Steuerquerschnitt (30) aufweist, der ihn quer zu seiner Achse durchsetzt und mit Abstand von seiner den Druckraum (15) begrenzenden Stirnseite (22) vorgesehen ist, und daß vorteilhaft der Steuerquerschnitt (30) mit der Hydraulikleitung (25) verbindbar ist, sobald der Dämpfungskolben (13) über seine die Hydraulikleitung (25) verschließende Stellung hinaus bewegt ist.

5. Anordnung nach Anspruch 4,
**dadurch gekennzeichnet, daß** die Hydraulikleitung (25) mit wenigstens einer Drosselstelle (32) verbunden ist, die vorteilhaft ein Ringspalt zwischen dem Dämpfungskolben (13) und der Wandung (24) eines Aufnahmeraumes (20) für den Dämpfungskolben (13) ist.

6. Anordnung nach einem der Ansprüche 1 bis 5,
**dadurch gekennzeichnet, daß** zur Dämpfung der zu bewegenden Masse (37, 42, 5, 6, 47, 75) in beiden Richtungen jeweils ein vorteilhaft entgegen der zu bewegenden Masse (5, 6, 47, 75, 37, 42) feder-belasteter Dämpfungskolben (13) angeordnet ist, die vorzugsweise spiegelsymmetrisch zueinander angeordnet sind.

7. Anordnung nach einem der Ansprüche 1 bis 6,
**dadurch gekennzeichnet, daß** der Dämpfungskolben (13) wenigstens zwei Ringstege (51, 52) aufweist, die jeweils zwei Druckräume (53 bis 56) voneinander trennen, und daß vorzugsweise die beiden Ringstege (51, 52) jeweils wenigstens eine Öffnung (57, 58) aufweisen, über die benachbarte Druckräume (53, 54, 55, 56) miteinander verbunden sind.

8. Anordnung nach Anspruch 7,
**dadurch gekennzeichnet, daß** der Dämpfungskolben (13) einen weiteren Ringsteg (65) aufweist, der zwischen den beiden anderen Ringstegen (51, 52) liegt und zwei benachbarte Druckräume (54, 55) voneinander trennt.

9. Anordnung nach einem der Ansprüche 1 bis 8,
**dadurch gekennzeichnet, daß** das Antriebssystem ein Elektroantrieb (1) ist und der Dämpfungskolben (13) Teil einer Ankerachse (5) des Elektroantriebes (1) ist.

10. Anordnung nach einem der Ansprüche 1 bis 8,
**dadurch gekennzeichnet, daß** das Antriebssystem ein Elektroantrieb (1) ist und der Dämpfungskolben (13) auf einer Ankerachse (5) des Elektroantriebes (1) verschiebbar angeordnet ist.

11. Anordnung nach einem der Ansprüche 1 bis 10,
**dadurch gekennzeichnet, daß** der Dämpfungskolben (13) eine Bohrung (85) aufweist, die in die den Druckraum (79, 82) begrenzende Stirnseite des Dämpfungskolbens (13) und in dessen Mantelfläche mündet.

12. Anordnung nach einem der Ansprüche 1 bis 11,
**dadurch gekennzeichnet, daß** die zu bewegende Masse (5, 6, 47, 75) nach Durchlaufen einer Freiflugstrecke (27, FF) auf den Dämpfungs-kolben (13) trifft und ihn gegen Federkraft und Hydraulikdruck unter Ausführung eines Dämpfungshubes (DH) des Dämpfungskolbens (13) mitnimmt, und daß vorzugsweise die zu bewegende Masse (5, 6, 47, 75) nach Durchlaufen des Dämpfungshubes den Dämpfungskolben (13) unter Ausführung eines Entlastungshubes (EH) mitnimmt, bei dem der Druck im Druckraum (15, 79, 82) abgebaut wird.

## Claims

1. Arrangement,
comprising a preferably electromagnetic drive system, in particular for camshaftless electromagnetic valve timing gear in internal combustion engines, with a mass (5, 6, 47, 75, 37, 42) which is to be moved and at least one damping element which exerts a force in opposition to the mass (5, 6, 47, 75, 37, 42) which is to be moved and is a damping piston (13)
which defines a pressure chamber (15, 54, 55, 79, 82),
**characterised in that** at least one hydraulic line (25, 60, 62, 80, 81) leads into the pressure chamber (15, 54, 55, 79, 82),
which line can be closed when the damping piston (13) is displaced along a displacement path by the mass (5, 6, 47, 75, 37, 42) which is to be moved while displacing the hydraulic medium from the pressure chamber (15, 54, 55, 79, 82) and while building up a hydraulic pressure in the pressure chamber such that the hydraulic pressure increases with the displacement path of the damping piston (13), and
in a starting position the mass (5, 6, 47, 75, 37, 42) which is to be moved is at a distance (27) from the damping piston (13), so that the arrangement has a free flight path in the region of which only a small force is initially required to displace the mass (5, 6, 47, 75, 37, 42) which is to be moved, and,
after overcoming the free flight path, the mass (5, 6, 47, 75, 37, 42) which is to be moved strikes the damping piston (13), upon the displacement of which a flow cross section of the hydraulic line (25, 60, 62, 80, 81) for the hydraulic medium passing from the pressure chamber (15, 54, 55, 79, 82) into the hydraulic line (25, 60, 62, 80, 81) can be continuously reduced.

2. Arrangement according to Claim 1,
**characterised in that**, in its end side (22) which defines the pressure chamber (15), the damping piston (13) and/or a housing (2) have/has at least one depression (23) with a cross section which preferably widens in the direction of the end side (22) of the damping piston (13), via which depression a connection between the pressure chamber (15) and the hydraulic line (25) can be established.

3. Arrangement according to either of Claims 1 and 2,
**characterised in that** the hydraulic line (25, 60, 62, 80, 81) is connected by a line to a reservoir (18) for the hydraulic medium.

4. Arrangement according to any one of Claims 1 to 3,
**characterised in that** the damping piston (13) has at least one control cross section (30) which passes through it transversely to its axis and is provided at a distance from its end side (22) which defines the pressure chamber (15), and that the control cross section (30) can advantageously be connected to the hydraulic line (25) as soon as the damping piston (13) is moved beyond its position which closes the hydraulic line (25).

5. Arrangement according to Claim 4,
**characterised in that** the hydraulic line (25) is connected to at least one throttling point (32) which is advantageously an annular gap between the damping piston (13) and the wall (24) of an accommodation chamber (20) for the damping piston (13).

6. Arrangement according to any one of Claims 1 to 5,
**characterised in that**, in order to damp the mass (37, 42, 5, 6, 47, 75) which is to be moved, a respective damping piston (13), which is advantageously spring-loaded towards the mass (5, 6, 47, 75, 37, 42) which is to be moved, is disposed in both directions, which pistons are preferably disposed in a specularly symmetrical manner relative to one another.

7. Arrangement according to any one of Claims 1 to 6,
**characterised in that** the damping piston (13) has at least two ring lands (51, 52) which in each case separate two pressure chambers (53 to 56) from one another, and that the two ring lands (51, 52) in each case preferably have at least one opening (57, 58) via which adjacent pressure chambers (53, 54, 55, 56) are connected to one another.

8. Arrangement according to Claim 7,
**characterised in that** the damping piston (13) has a further ring land (65) which lies between the two other ring lands (51, 52) and separates two adjacent pressure chambers (54, 55) from one another.

9. Arrangement according to any one of Claims 1 to 8,
**characterised in that** the drive system is an electric drive (1) and the damping piston (13) is part of an armature shaft (5) of the electric drive (1).

10. Arrangement according to any one of Claims 1 to 8,
**characterised in that** the drive system is an electric drive (1) and the damping piston (13) is disposed such that it can be displaced on an armature shaft (5) of the electric drive (1).

11. Arrangement according to any one of Claims 1 to 10,
**characterised in that** the damping piston (13) has a bore (85) which leads into the end side of the damping piston (13) which defines the pressure chamber (79, 82) and into the circumferential surface thereof.

12. Arrangement according to any one of Claims 1 to 11,
**characterised in that**, after passing through a free flight path (27, FF), the mass (5, 6, 47, 75) which is to be moved strikes the damping piston (13) and carries along the latter against spring force and hydraulic pressure while the damping piston (13) executes a damping stroke (DH), and that, after passing through the damping stroke, the mass (5, 6, 47, 75) which is to be moved preferably carries along the damping piston (13) while a retraction stroke (EH) is executed, upon which stroke the pressure in the pressure chamber (15, 79, 82) is reduced.

## Revendications

1. Dispositif,
qui comprend un système d'entraînement de préférence électromagnétique, en particulier pour des commandes de soupape électromagnétiques sans arbres à came dans des moteurs à combustion, avec une masse à déplacer (5, 6, 47, 75, 37, 42) et au moins un élément d'amortissement qui exerce une force opposée à la masse à déplacer (5, 6, 47, 75, 37, 42) et qui est un piston amortisseur (13),
qui délimite une chambre de pression (15, 54, 55, 79, 82), **caractérisé en ce qu'**au moins une conduite hydraulique (25, 60, 62, 80, 81) débouche dans la chambre de pression (15, 54, 55, 79, 82),
conduite qui lors du coulissement du piston amortisseur (13) le long d'une trajectoire de coulissement peut être fermée par la masse à déplacer (5, 6, 47, 75, 37, 42) par refoulement du fluide hydraulique hors de la chambre de pression (15, 54, 55, 79, 82) et par génération d'une pression hydraulique dans la chambre de pression de sorte que la pression hydraulique augmente avec la trajectoire croissante du piston amortisseur (13),
**en ce que** la masse à déplacer (5, 6, 47, 75, 37, 42) est à une certaine distance (27) du piston amortisseur (13) dans une position de départ de sorte que le dispositif présente une course libre dans la zone dans laquelle seule une faible force est nécessaire au début pour le déplacement de la masse à déplacer (5, 6, 47, 75, 37, 42),
et **en ce que** la masse à déplacer (5, 6, 47, 75, 37, 42) fait impact après avoir surmonté la course libre sur le piston amortisseur (13), lors du déplacement duquel une section transversale d'écoulement de la conduite hydraulique (25, 60, 62, 80, 81) pour le fluide hydraulique peut être réduite en permanence pour amener le fluide hydraulique de la chambre de pression (15, 54, 55, 79, 82) dans la conduite hydraulique (25, 60, 62, 80, 81).

2. Dispositif selon la revendication 1,
**caractérisé en ce que** le piston amortisseur (13) présente dans sa face avant (22) délimitant la chambre de pression (15) et/ou un carter (2) au moins un renfoncement (23) avec une section transversale s'élargissant de préférence en direction de la face avant (22) du piston amortisseur (13) par l'intermédiaire duquel une connexion peut être établie entre la chambre de pression (15) et la conduite hydraulique (25).

3. Dispositif selon l'une quelconque des revendications 1 à 2,
**caractérisé en ce que** la conduite hydraulique (25, 60, 62, 80, 81) est reliée à un réservoir (18) de fluide hydraulique.

4. Dispositif selon l'une quelconque des revendications 1 à 3,
**caractérisé en ce que** le piston amortisseur (13) présente au moins une section transversale de commande (30) qui le traverse transversalement à son axe et qui est prévue à distance de sa face avant (22) délimitant la chambre de pression (15) et **en ce que** de manière avantageuse, la section transversale de commande (30) peut être reliée à la conduite hydraulique (25) dès que le piston amortisseur (13) est déplacé au-delà de sa position fermant la conduite hydraulique (25).

5. Dispositif selon la revendication 4,
**caractérisé en ce que** la conduite hydraulique (25) est reliée à au moins un point d'étranglement (32) qui est de manière avantageuse une fente annulaire pratiquée entre le piston amortisseur (13) et la paroi (24) d'une chambre de logement (20) du piston amortisseur (13).

6. Dispositif selon l'une quelconque des revendications 1 à 5,
**caractérisé en ce que** pour l'amortissement de la masse à déplacer (37, 42, 5, 6, 47, 75) dans les deux directions, il est prévu respectivement un piston amortisseur (13) chargé de manière avantageuse par ressort à l'encontre de la masse à déplacer (5, 6, 47, 75, 37, 42), lesdits pistons étant disposés de préférence symétriquement l'un par rapport à l'autre.

7. Dispositif selon l'une quelconque des revendications 1 à 6,
**caractérisé en ce que** le piston amortisseur (13) présente au moins deux arcades annulaires (51, 52) qui séparent respectivement deux chambres de pression (53 à 56) et **en ce que** les deux arcades annulaires (51, 52) présentent de préférence respectivement au moins une ouverture (57, 58) permettant de relier entre elles les chambres de pression (53, 54, 55, 56) voisines.

8. Dispositif selon la revendication 7,
**caractérisé en ce que** le piston amortisseur (13) présente une autre arcade annulaire (65) qui se trouve entre les deux autres arcades annulaires (51, 52) et sépare deux chambres de pression (54, 55) voisines.

9. Dispositif selon l'une quelconque des revendications 1 à 8,
**caractérisé en ce que** le système d'entraînement est un entraînement électrique (1) et **en ce que** le piston amortisseur (13) fait partie de l'axe d'ancrage (5) de l'entraînement électrique (1).

10. Dispositif selon l'une quelconque des revendications 1 à 8,
**caractérisé en ce que** le système d'entraînement est un entraînement électrique (1) et **en ce que** le piston amortisseur (13) est disposé de façon coulissante sur l'axe d'ancrage (5) de l'entraînement électrique (1).

11. Dispositif selon l'une quelconque des revendications 1 à 10,
**caractérisé en ce que** le piston amortisseur (13) présente un alésage (85) qui débouche dans la face avant du piston amortisseur (13) délimitant la chambre de pression (79, 82) et dans la surface d'enveloppe de cette dernière.

12. Dispositif selon l'une quelconque des revendications 1 à 11,
**caractérisé en ce que** la masse à déplacer (5, 6, 47, 75) fait impact sur le piston amortisseur (13) après avoir traversé la course libre (27, FF) et l'entraîne à l'encontre de la force de ressort et de la pression hydraulique en exécutant une course d'amortissement (DH) du piston d'amortissement (13) et **en ce qu'**après avoir traversé la course d'amortissement, la masse à déplacer (5, 6, 47, 75) entraîne de préférence le piston amortisseur (13) en exécutant une course de décharge (EH) au cours de laquelle la pression chute dans la chambre de pression (15, 79, 82).
